(19) Europäisches Patentamt
European Patent Office
Office européen des brevets

(11) EP 4 636 435 A1

(12) EUROPEAN PATENT APPLICATION

(43) Date of publication:
22.10.2025 Bulletin 2025/43

(21) Application number: 24305612.4

(22) Date of filing: 19.04.2024

(51) International Patent Classification (IPC):
G01S 7/48 (2006.01)     G01S 7/4863 (2020.01)
G01S 7/4865 (2020.01)     G01S 7/4914 (2020.01)
G01S 7/4915 (2020.01)     G01S 7/497 (2006.01)

(52) Cooperative Patent Classification (CPC):
G01S 7/4863; G01S 7/4808; G01S 7/4865;
G01S 7/4914; G01S 7/4915; G01S 7/497;
G01S 7/4802

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: STMicroelectronics International N.V.
1228 Plan-les-Ouates, Geneva (CH)

(72) Inventors:
• LEBIHEN, Thierry
92340 BOURG-LA-REIN (FR)
• POTHIER, Olivier
92330 SCEAUX (FR)
• MACELA, Victor
75006 Paris (FR)

(74) Representative: Casalonga
Casalonga & Partners
Bayerstraße 71/73
80335 München (DE)

(54) METHOD AND SYSTEM FOR HOMOGENIZING PIXEL VALUES IN A PIXEL ARRAY

(57) The method (200) for homogenizing values of a pixel array, comprises:
- identifying (210, 212) pixels where a target has been detected, and correctable hole pixels (px_k) where no target has been detected, surrounded with at least one neighboring pixel where a target has been detected,
- computing (220) an equivalent target detection confidence indicator for each correctable hole pixel (px_k), according to target feature values calculated for the neighboring pixels (px_i) of the correctable hole pixel, the equivalent target detection confidence indicator being representative of the target detection confidence indicator that the target detected in the neighborhood would have at the correctable hole pixel if the target detected in the neighborhood was also present at the correctable hole pixel position, in accordance with parameters including a sensitivity of the hole pixel,
- if the computed equivalent target detection confidence indicator is lower than a detection threshold, computing (222) a correction target feature value, associated to the hole pixel.

## FIG.2

**Description**

Some embodiments of the disclosure relate to "Time of Flight" (ToF) devices (either dToF : direct Time of Flight or iToF : indirect Time of Flight devices), and more particularly to the homogenization of pixel values (typically distances) in a pixel array.

Devices for determining the distance (or depth, or range) to objects or targets are known. One currently used method is called "Time of Flight" (ToF). This method comprises sending a light signal towards the object and measuring the time taken by the signal to travel to the object and to travel back to the device.

dToF (direct Time of Flight) devices measure directly the time taken by the signal to travel to the object and to travel back to the device.

iToF (indirect Time of Flight) devices calculate the time taken by the signal for this travel by measuring the phase shift between the signal coming out of the light source and the signal reflected from the object and detected by a light sensor. Knowing this phase shift and the speed of light enables the determination of the distance to the object.

Single photon avalanche diodes (SPAD) may be used as a detector of the reflected light pulses. A photon may generate a carrier in the SPAD through the photoelectric effect. The photo-generated carrier may trigger an avalanche current in one or more of the SPADs in a SPAD pixel array. The avalanche current may signal an event, namely that a photon of light has been detected.

In order to produce accurate timing information on the arrival of each individual photon originating from the optical light radiation, single-photon sensitive detectors may be adapted to generate time-series histograms of the number of photons detected during successive emission periods. Thus, such time-series histograms are constituted by several bins each associating a number of detected photons to a given acquisition time during the emission periods. Algorithms are then implemented to identify the bins of the histograms that are representative of photons originating from the radiation reflected by one or several object(s).

In high-resolution ToF sensors, for instance used for facial recognition applications, an array of SPAD pixels is provided in order to acquire a depth map of the scene in the field of view. The array may include tens or hundreds of pixels. Each pixel may include a group of several SPAD detectors.

The sensitivity distribution of the pixels may not be uniform along the sensor's array. The sensitivity of each pixel may depend on the number of functional SPADs amongst the group of several SPADs. For example, a pixel including 2 functional SPADs (among a group of 4) would have half the sensitivity of a pixel with all of the 4 functional SPADs. In the worst case a pixel could be completely dead, with no functional SPAD.

Defects and malfunctions in SPADs statistically occur, for example because of random physical drift in manufacturing methods steps.

In addition, variations in dark current of each respective SPAD, also caused by random physical drift, may also reduce the sensitivity of pixels with respect to another.

Moreover, variation of ambient noise level of each respective SPAD, caused by the scene, may also reduce the sensitivity of pixels with respect to another.

Therefore, a target covering the full field of view could be beyond the detection threshold for some pixels and not for others which would result in a target with falsely detected holes. A hole pixel may be defined as a pixel where no target is detected or where a target feature value is undefined, surrounded by pixels where a target has been detected, and being associated with calculated target feature values.

The problem when holes are seen in a target is to decide if these holes are real or not in order to correct them ("fill the holes") or not. This decisional processing should advantageously be embedded into the ToF sensor firmware.

A classical and well-known solution is to systematically fill the holes while not taking into account the possibility of a target including real hole(s). The correction for filling the holes typically performs an interpolation based on the neighboring pixel's values.

Hence, there is a need to provide an embedded solution to accurately make the decision whether or not to fill the holes.

According to embodiments it is proposed a homogenizer method and system having the following advantages:
It allows to mitigate for the distribution of sensibilities of some pixels of ToF sensors.

It allows to increase the max range for some pixels.

It allows to correct the dead pixels.

It is implemented in an embedded manner within signal processing of the firmware generating a distance map output.

Its computation does not produce latency issue.

According to embodiments it is proposed to

- analyze the targets, if any, in the neighborhood of the hole,
- for each of these targets (in the same distance group), analyze the pattern it has,
- filter out the patterns for which it is a priori not necessary to fill the hole (typically because the associated ground truth (the "real" target) is known to be improbable or because of a particular use case),
- for the remaining patterns (which are not filtered out), compute an equivalent target detection confidence indicator at the hole pixel, defined as "the target detection confidence indicator that a target detected in the neighborhood would have at the hole pixel if the target present in the neighborhood was also present at the hole pixel position, taking into account the sensitivity of the hole pixel; and computed from the target features values of the neighboring pixels",

- if the equivalent target detection confidence indicator is greater than a detection threshold and therefore it is very likely that the target would have been detected if the target was also present at the hole pixel position in the ground truth, the decision is taken not to fill the hole,

- otherwise, if the equivalent target detection confidence indicator is not greater than the detection threshold and therefore it is likely that the target would not have been detected if the target was also present at the hole pixel position in the ground truth, the decision is taken to fill the hole, for example by an interpolation based on the neighboring pixel's values.

According to an aspect, a method is proposed for homogenizing the values of a pixel array, the method comprising:

- identifying pixels where a target has been detected, and correctable hole pixels where no target has been detected, surrounded with at least one neighboring pixel where a target has been detected,

- calculating target feature values for the pixels where a target has been detected,

- computing an equivalent target detection confidence indicator at each correctable hole pixel, according to the target feature values calculated for the neighboring pixels of the correctable hole pixel, the equivalent target detection confidence indicator being representative of the target detection confidence indicator that the target detected in neighborhood would have at the correctable hole pixel, if the target detected in the neighborhood was also present at the correctable hole pixel position, in accordance with parameters including a sensitivity of the hole pixel,

- if the computed equivalent target detection confidence indicator is lower than a detection threshold, computing a correction target feature value, associated to the hole pixel.

Target feature values may be defined as the direct or indirect properties of the target, calculated from the signal sensed by the pixel array. For example, in dToF cases, target feature values may include the ranges, the useful signal rates, and target detection confidence indicators, calculated from the generated histograms.

The target detection confidence indicator is for instance calculated in order to provide an indication that the target is detected with a reliability or plausibility that is sufficient in relation to the accuracy of the time-of-flight detection.

According to an embodiment, the parameters used for computing the equivalent target detection confidence indicator include a useful signal rate of at least one of the neighboring pixels.

According to an embodiment, the parameters used for computing the equivalent target detection confidence indicator include an ambient noise rate of the hole pixel and of at least one of the neighboring pixels.

According to an embodiment, the parameters used for computing the equivalent target detection confidence indicator include a number of active single photon detectors in the hole pixel and an integration time.

According to an embodiment, the parameters used for computing the equivalent target detection confidence indicator include a cross-talk rate of the hole pixel and of at least one of the neighboring pixels.

According to an embodiment, identifying the correctable hole pixels includes an identification of a pattern in the neighboring pixels of the respective hole pixel, amongst a set of position patterns and the target feature values at the neighboring pixels, representative of correctable hole pixel cases.

According to an embodiment, the neighboring pixels of the correctable hole pixel are the pixels in a position touching the hole pixel laterally or diagonally.

According to an embodiment, the method additionally includes:

- emitting an optical radiation,

- detecting photons of an optical radiation, by the pixels of the array,

- generating a histogram comprising bins associating a number of detected photons to a given acquisition time for each pixel,

- processing the histograms of the pixels, in order to provide the identification of pixels where a target has been detected, the correctable hole pixels, and the target feature values.

According to an embodiment, the target detection confidence indicator is adapted to trigger the binary decision either that a target has been detected if the indicator's value is greater than a threshold, or that no target has been detected if the indicator's value is lower than a threshold.

According to another aspect, a system is proposed, the system including a pixel array, and processing means configured:

- to identify pixels where a target has been detected, and correctable hole pixels where no target has been detected, surrounded with at least one neighboring pixel where a target has been detected,,

- to calculate target feature values for the pixels where a target has been detected,

- to compute an equivalent target detection confidence indicator for each correctable hole pixel, according to the target feature values calculated for the neighboring pixels of the correctable hole pixel, the equivalent target detection confidence indicator being representative of the target detection confidence indicator that the target detected in the neighborhood would have at the correctable hole pixel, if the target detected in the neighborhood was also present at the correctable hole pixel position, in accordance with parameters including a sensitivity of the hole pixel,

- if the computed equivalent target detection confidence indicator is lower than a detection threshold, to compute a correction target feature value, associated to the hole pixel.

According to an embodiment, the processing means are configured to compute the equivalent target detection confidence indicator according to the computing step of the method as defined above.

According to an embodiment, the processing means are configured to identify correctable hole pixels according to the identifying step of the method as defined above.

According to an embodiment, the system additionally includes:

- emitting means configured so as to be able to emit an optical radiation,
- receiving means configured so as to be able to detect photons of an optical radiation, comprising the pixel array,
- histogram generation means configured to generate a histogram comprising bins associating a number of detected photons to a given acquisition time for each pixel,

and wherein the processing means are configured to process the histogram of the pixels, in order to provide the identification of pixels where a target has been detected, the correctable hole pixels, and the target feature values .

Other advantages and features of the invention will appear upon examining the detailed description of non-limiting implementation and embodiments, and from the appended drawings wherein:

[Fig. 1];
[Fig.2];
[Fig.3];

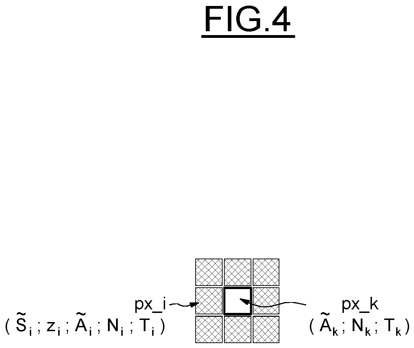

[Fig.4] schematically illustrate embodiments and implementation modes of the invention.

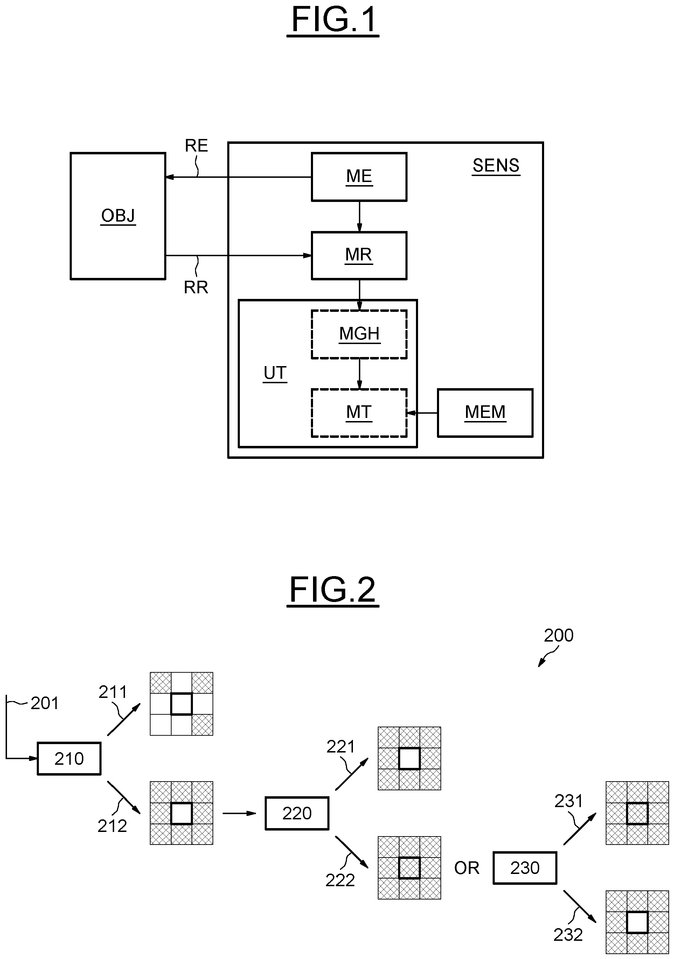

Figure 1 illustrates a time-of-flight sensor SENS according to an embodiment of the invention.

The time-of-flight sensor SENS comprises emitting means ME configured to emit optical radiations RE on a periodic basis.

The emitting means ME may consist of a Vertical-Cavity Surface-Emitting Laser, commonly known to persons skilled in the art under the acronym "VCSEL".

If one or several object(s) OBJ are present within the field of the optical radiation, the time-of-flight sensor SENS could receive a reflected optical radiation RR resulting from a reflection of the optical radiation on the object(s) OBJ.

Thus, the time-of-flight sensor SENS comprises receiving means MR configured to receive optical radiations RR reflected by the objects OBJ within the field of view of the time-of-flight sensor.

The receiving means MR comprise photon detector(s), such as single photon avalanche diodes, classically known as "SPAD" by the person skilled in the art, that may be used as a detector of the reflected light pulses. SPAD photon detector(s) may be arranged in an array of pixels capable to acquire a depth map of the scene in the field of view. The array may include tens or hundreds of pixels, for example an array of 16* 16=256 pixels. Each pixel may include a group of several SPAD detectors, for example each pixel may include a group of 4 (four) SPAD detectors.

The time-of-flight sensor SENS comprises histogram generation means MGH configured to generate a histogram from the signals output by the array of single photon detectors. In particular, the histogram generation means MGH are configured to count the number of photons detected by the receiving means at several successive acquisition times.

Thus, the histogram generation means MGH are configured to generate a histogram comprising different bins. Each bin associates a number of detected photons to a given acquisition time.

More particularly, a histogram is acquired over a given period. The bins of a histogram are associated to different acquisition times of the acquisition period of the histogram. The acquisition period of one histogram starts as of the time of emission of an optical radiation by the emitting means, and lasts until a predefined number of bins is acquired.

Some bins of such histograms may be representative of photons originating from the radiation reflected by an object, and thus representative of the presence of an object within the field of view of the sensor.

Algorithms are then implemented to identify the bins of the histograms that are representative of photons originating from the radiation reflected by one or several object(s).

In particular, it is possible to identify the bins that are representative of the presence of an object by comparing the bins with a fixed threshold greater than or equal to the given threshold delimiting the ambient noise. The ambient noise typically designates the background noise originating from the lightening conditions of use of the sensor (in typical ToF application, the infrared "ambient" light which is not emitted by the emitter).

By "time", it should be understood a very short duration in comparison with the acquisition period of a histogram. For example, an acquisition time may last 250 picoseconds and an acquisition period of a histogram may last 36 nanoseconds in order to acquire 144 bins.

Furthermore, it is also possible to acquire several histograms one after another. The overall period of acquisition of these histograms may be in the range of 15 milliseconds.

Preferably, the histogram generation means MGH is implemented by software means executed by a processing unit UT of the time-of-flight sensor. For example, the processing unit UT may be integrated in a microprocessor device.

The time-of-flight sensor SENS also comprises processing means MT configured to perform postprocessing on the generated histograms. The postprocessing allows determining the bins representative of the presence of an object within the field of view of the sensor, or, in other words, identifying pixels where a target has been detected and pixels where no target has been detected. A bin representative of the presence of an object allows determining the distance between the object and the sensor by taking into account the acquisition time associated to this bin.

Preferably, the processing means MT is implemented by software means executed by the processing unit UT.

In particular, the processing means MT are configured to process the histograms of the pixels, in order to provide processed values to communicate the information of a detection and properties of a target presence in the field of view at the position of the respective pixel. Those processed values are called "target feature values" from the respective pixels.

Target feature values may be defined as the direct or indirect properties of the target, calculated from the signal sensed by the pixel array. For example, in dToF cases, target feature values may include the ranges, the useful signal rates, and target detection confidence indicators, calculated from the generated histograms.

In addition, the processed means MT are configured to perform a method 200 for homogenizing the target feature values described hereinafter in relation with figure 2.

The homogenizing method 200 may be performed in the pipeline processing of the ToF sensor SENS, as a signal processing between the "raw" frame acquisition by the pixel array and the output of a target feature map (e.g., distance map).

Hence, we now refer to figure 2.

Figure 2 illustrates a method 200 for homogenizing the target feature values, performed in order to take into account the fact that a hole pixel is representative of the target's ground truth or not.

A "hole pixel" is defined as a pixel where no target has been detected, being thus associated with an undefined target feature value, which is surrounded by pixels where a target has been detected, that is to say pixels associated with target feature values.

The method 200, in the all-over pipeline processing performed by the ToF sensor SENS, is performed afterward to a stage 201 providing target feature values from the pixels of the array. The target feature values being for instance based on a processing of "raw" (histogram) signals, so as to communicate the information of a detection of a target presence in the field of view at the position of the respective pixel s.

As mentioned before in relation with figure 1, the raw signals may be acquired by implementing the steps of: emitting an optical radiation; detecting photons of an optical radiation by the pixel array; generating a histogram comprising bins associating a number of detected photons to a given acquisition time for each pixel; processing the histograms of the pixels, in order to provide the identification of pixels where a target has been detected or where no target has been detected, and the target feature values.

The method then includes an identifying step 210 adapted to identify correctable hole pixels, that is to say hole pixels that can be corrected.

The identifying step 210 may include an analysis of the targets, if any, in the pixels neighboring the hole pixel, in order to filter out 211 the hole pixels for which it is a priori not necessary to correct the hole (for instance because the associated ground truth is known to be improbable or because of a particular use case).

With reference to figure 4, the neighboring pixels px_i are the pixels in a position touching the hole pixel px_k laterally or diagonally, that is to say the 8 pixels px_i surrounding the central pixel px_k of a 3*3 square array of 9 pixels.

In a most simple implementation, the identifying step 210 may filter out the hole that have less than a threshold quantity of detected targets in the neighboring pixels px_i.

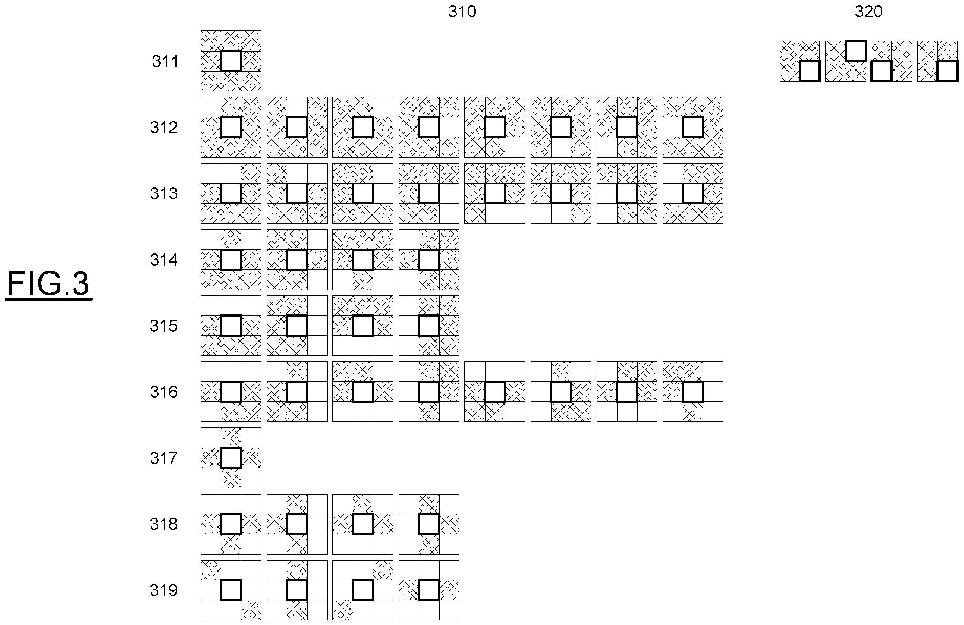

In an advantageous implementation, the identifying step 210 includes an identification of a pattern 311-319, 320 (figure 3) in the neighborhood of the respective hole pixel px_k, amongst a set of patterns 310, 320 (figure 3) representatives of cases not to filter out, i.e. the correctable cases.

The patterns may be determined on the positions and the target feature values in the neighboring pixels px_i. In particular there could be, for a given neighboring pixel px_i, several patterns corresponding to different targets grouped by target distances to the sensor.

We now refer to figure 3 in this regard.

Figure 3 illustrates an example set of patterns 310, 320 representatives of correctable cases.

The patterns may for instance be stored in an internal memory MEM accessible by the processing unit UT and the processing means MT.

The patterns are based on the positions and the target feature values in the neighboring pixels surrounding the hole pixel. In each of these pattern examples, the hole pixel is depicted by a white box in a thick stroke, the neighboring pixel where a target is detected and thus generating a target feature value are depicted by a crosshatched box, while the neighboring pixel where no target is detected and thus generating an undefined target feature value are depicted by a white box in a thin stroke.

The set of position patterns 310 illustrate the "normal" cases where the hole pixel is not positioned at a corner of the array, and is thus surrounded by 8 pixels in a 3*3 square local sub-array.

Line 311 illustrates the case where all of the 8 neighboring pixels surrounding the hole pixel have generated a target feature value belonging to a group of interest (typically the 8 neighboring pixels surrounding the hole pixel target distance values of the same order of magnitude).

Line 312 illustrates the cases where 7 amongst the 8 neighboring pixels surrounding the hole pixel have generated a target feature value.

Line 313 illustrates the cases where 6 neighboring pixels have generated a target feature value, those 6 pixels including 3 side-located and 3 diagonal-located pixels.

Line 314 illustrates the cases where 6 neighboring pixels have generated a target feature value, those 6 pixels including the 4 side-located and 2 diagonal-located pixels belonging to a same row or column.

Line 315 illustrates the cases where 5 neighboring pixels have generated a target feature value, those 5 pixels belonging to two adjacent rows or columns.

Line 316 illustrates the cases where 4 neighboring pixels have generated a target feature value, those 4 pixels including 3 side-located and 1 diagonal-located pixels, the diagonal-located pixel being adjacent to 2 of the 3 side-located pixels.

Line 317 illustrates the case where only the all 4 side-located neighboring pixels have generated a target feature value.

Line 318 illustrates the cases where 3 amongst the 4 side-located neighboring pixels have generated a target feature value.

Line 319 illustrates the cases where 2 amongst the 4 side-located or amongst the 4 diagonal-located neighboring pixels have generated a target feature value, these 2 pixels being aligned in a same row, column, or diagonal.

The set of position patterns 320 illustrate the cases where the hole pixel is positioned at a corner of the array, and where all of the neighboring pixels surrounding the hole pixel have generated a target feature value.

We now refer back to figure 2.

The method 200 then comprises, for the remaining patterns 212 which are not filtered out, a computation step 220 of the equivalent target detection confidence indicator at the hole pixel px_k, using as computational inputs the target features values calculated from the surrounding pixels px_i, that the target detected in the neighborhood would have at the hole pixel if the target was also present at the hole pixel position, taking into account some parameters including the sensitivity of the hole pixel.

The target detection confidence indicator is adapted to trigger the binary decision that a target is detected at this pixel (if this indicator is greater than a threshold) or no target is detected at this pixel (if this indicator is lower than a threshold),

For example, the target detection confidence indicator could typically be a statistical measure commonly used in the present technical field for expressing the signal over noise ratio, such as for instance the measure called "Z-score" (as mentioned hereinafter, defined in the European patent application publication EP 4 063 899 A1).

In other words, step 220 comprises computing the equivalent target detection confidence indicator at each correctable hole pixel 212, the equivalent target detection confidence indicator being representative of the target detection confidence indicator that the target detected in the neighborhood would have at the hole pixel if the target detected in the neighborhood was also present at the hole pixel position, in accordance with the related target feature values calculated in the neighboring pixels px_i of the correctable hole pixel px_k, and in accordance with parameters including a sensitivity of the hole pixel.

Then, if the computed equivalent target detection confidence indicator is greater than the detection threshold of the photodetectors and therefore it is very likely that the target would have been detected if the target was also present at the hole pixel position in the ground truth, the decision is taken not to fill the hole 221.

Otherwise, if the computed equivalent target detection confidence indicator is not greater than the detection threshold and therefore it is likely that the target would not have been detected if the target was also present at the hole pixel position in the ground truth, the decision is taken to fill the hole 222.

"Filling the hole", that is to say computing a correction target feature value associated to the (corrected) hole pixel, and replacing the undefined target feature value, may for instance be performed by a classical interpolation operation based on the values of the neighboring target feature values.

For example, the interpolation operation may basically average the values of the neighboring target feature values, or compute other classical calculation.

The computation of the equivalent target detection confidence indicator that a target detected in the neighborhood would have at the hole pixel if the target was also present at the hole pixel position, is based on the available computing parameters (for instance device parameters and target feature values) from the hole pixel px_k and the neighboring pixels.

Hence, those computing parameters may include target feature values, such as the target detection confidence indicator $z_i$ of the neighboring pixels px_i (at least one); the useful signal rate $\tilde{S}_i$ of at least one of the neighboring pixels px_i; the ambient rate of the hole pixel $\tilde{A}_k$ and the ambient rate of at least one of the neighboring pixels $\tilde{A}_i$.

The ambient rate of a pixel $\tilde{A}_k$, $\tilde{A}_i$ typically designates the background noise originating from the lightening conditions of use of the sensor (in typical ToF application, the infrared "ambient" light which is not emitted by the emitter).

Also, the sensitivity parameters may include device and control parameters, such as the number of active single photon detectors in the hole pixel $N_k$ and its bin integration time $tT_k$, advantageously in relation with a number of active single photon detectors in the neighboring pixels $N_i$ and their respective bin integration times $tT_i$.

Furthermore, a cross-talk rate for the hole pixel $\tilde{X}_k$ and for the neighboring pixels $\tilde{X}_i$ may be assumed to be egal if not explicitly known.

The cross-talk rates of a pixel $\tilde{X}_k$, $\tilde{X}_i$ typically designate unwanted parasitic signals emitted by the emitting means ME, like a VCSEL, and directly travelling inside the time-of-flight device to the receiving means MR, for example to the SPAD pixel array of a time-of-flight sensor SENS.

For instance, in the case of "dToF" (conventionally used for "direct Time of Flight") device, the target detection confidence indicator can be the Z-score as defined in the European patent application publication EP 4 063 899 A1. The equivalent Z-score may be obtained by starting from the following expression of the Z-scores:

$$z_i = \sqrt{\frac{tN_iT_i}{\frac{\tilde{A}_i}{n}+\beta\frac{\tilde{X}_i}{n}}} \cdot \tilde{S}_i \quad [\text{Eq 1}]$$

$$z_k = \sqrt{\frac{tN_kT_k}{\frac{\tilde{A}_k}{n}+\beta\frac{\tilde{X}_k}{n}}} \cdot \tilde{S}_k \quad [\text{Eq 2}]$$

and assuming that the target fully covers neighboring pixel's zone px_i and hole pixel's zone px_k with no slant, that is to say:

$$\tilde{S}_k = \tilde{S}_i \quad [\text{Eq 3}]$$

and also assuming that cross-talk rates are equal in neighboring pixels and the hole pixel, that is to say:

$$\tilde{X}_k = \tilde{X}_i \quad [\text{Eq 4}]$$

we obtain the following final expression of the equivalent Z-score:

$$z_k = \sqrt{\frac{tN_kT_k}{\frac{\tilde{A}_k}{n}+tN_iT_i\left(\frac{\tilde{S}_i}{z_i}\right)^2-\frac{\tilde{A}_i}{n}}} \cdot \tilde{S}_i \quad [\text{Eq 5}]$$

Equations [Eq 1] to [Eq 5] use the following notations (index "j" meaning either index "i" applied for neighboring pixels px_i or index "k" applied for the hole pixel px_k):

$N_j$ : number of SPAD in the pixel;
$T_j$ : total period elapsed;
$t$ : bin duration;
$\tilde{A}_j$ : ambient rate (in counts per second and per SPAD) (the clipped value so never null);
$\tilde{S}_j$ : useful signal rate (in counts per seconds and per SPAD);
$\tilde{X}_j$ : cross-talk rate (in counts per seconds and per SPAD);
$n, \beta$ : coefficients.

Several computations of [Eq 5]'s can be done for several neighboring pixels px_i and the equivalent Z-score for the hole pixel px_k could be for instance the average of all the computed [Eq 5]'s Z-scores $z_k$.

As an alternative embodiment than directly "fill the hole" if the obtained equivalent target detection confidence indicator is not greater than the detection threshold 222, the decision may be taken after an optional step 230 using some a priori knowledge of the target the sensor faced with.

For example, the a priori knowledge can provide a probability score of the first hypothesis "H1" that the target is present in the hole pixel px_k detection zone, and a probability score of the second hypothesis "H2" that the target is not present in the hole pixel px_k detection zone.

Indeed, even if the equivalent target detection confidence indicator is smaller than the detection threshold, it is still possible that the probability H2 is greater than the probability H1.

Such probability scores may be computed for instance with respect to sets of previous acquisitions of the same target. For example, such considerations of past acquisitions may be used for detecting a "flickering" effect of the pixel below the detection threshold.

Hence, if probability H1 is greater than probability of H2, then the decision to fill the hole px_k is taken 231; while if probability H1 is smaller than probability of H2, the decision to not fill the hole px_k is taken 232.

In resume, system and method have been disclosed, and provide an embedded solution to accurately make the decision whether holes are real or not in order to correct them or not, by using the equivalent target detection confidence indicator and the neighborhood pattern to infer the reality of a target at a pixel position where a target feature value is undefined. Disclosed embodiments and implementation provide the advantages of: mitigating for the distribution of sensibilities of some pixels of ToF sensors; increasing the max range for some pixels; correcting the dead pixels; not generating latency issues; and being implemented in a fully embedded manner.

## Claims

1. Method (200) for homogenizing values of a pixel array, comprising:

   - identifying (210, 212) pixels where a target has been detected, and correctable hole pixels (px_k) where no target has been detected, surrounded with at least one neighboring pixel (px_i) where a target has been detected,
   - calculating target feature values for the pixels where a target has been detected,
   - computing (220) an equivalent target detection confidence indicator for each correctable hole pixel (px_k), according to the target feature values calculated for the neighboring pixels (px_i) of the correctable hole pixel, the equivalent target detection confidence indicator being representative of the target detection confidence indicator that the target detected in the neighborhood would have at the correctable hole pixel if the target detected in the neighborhood was also present at the correctable hole pixel position, in accordance with parameters including a sensitivity of the hole pixel,
   - if the computed equivalent target detection confidence indicator is lower than a detection threshold, computing (222) a correction target feature value, associated to the hole pixel.

2. Method according to claim 1, wherein the parameters used for computing (220) the equivalent target detection confidence indicator include a useful signal rate of at least one of the neighboring pixels (px_i).

3. Method according to any of claims 1 or 2, wherein the parameters used for computing (220) the equivalent target detection confidence indicator include an ambient noise rate of the hole pixel and of at least one of the neighboring pixels.

4. Method according to any of claims 1 to 3, wherein the parameters used for computing (220) the equivalent target detection confidence indicator include a number of active single photon detectors in the hole pixel and an integration time.

5. Method according to any of claims 1 to 4, wherein the parameters used for computing (220) the equivalent target detection confidence indicator include a cross-talk rate of the hole pixel and of at least one of the neighboring pixels.

6. Method according to any of claims 1 to 5, wherein identifying (210) the correctable hole pixels includes an identification of a pattern (311-319, 320) in the neighboring pixels (px_i) of the respective hole pixel (px_k), amongst a set of position patterns (310, 320), and the target feature values at the neighboring pixels (px_i), representative of correctable hole pixel cases.

7. Method according to any of claims 1 to 6, wherein the neighboring pixels (px_i) of the correctable hole pixel are the pixels in a position touching the hole pixel (px_k) laterally or diagonally.

8. Method according to any of claims 1 to 7, additionally including:

   - emitting an optical radiation (RE),
   - detecting photons of an optical radiation (RR), by the pixel array (MR),
   - generating (MGH) a histogram comprising bins associating a number of detected photons to a given acquisition time for each pixel,
   - processing (MT) the histograms of the pixels, in order to provide the identification of pixels where a target has been detected, the correctable hole pixels, and the target feature values.

9. Method according to any of claims 1 to 8, wherein the target detection confidence indicator is adapted to trigger the binary decision either that a target has been detected if the indicator's value is greater than a threshold, or that no target has been detected if the indicator's value is lower than a threshold.

10. System including a pixel array (MR), and processing means (MT) configured:

   - to identify (210) pixels where a target has been detected, and correctable hole pixels (212) where no target has been detected, surrounded with at least one neighboring pixel where a target has been detected,
   - to compute (220) an equivalent target detection confidence indicator for each correctable hole pixel (px_k), according to the target feature values calculated for the neighboring pixels (px_i) of the correctable hole pixel, the equivalent target detection confidence indicator being representative of the target detection confidence indicator that the target detected in the neighborhood would have at the correctable hole pixel if the target detected in the neighborhood was also present at the correctable hole pixel position, in accordance with parameters including a sensitivity of the hole pixel,
   - if the computed equivalent target detection confidence indicator is lower than a detection threshold, to compute (222) a correction target feature value, associated to the hole pixel.

11. System according to claim 10, wherein the processing means (MT) are configured to compute (220) the equivalent target detection confidence indicator according to the computing step of the method according to any of claims 2 to 8.

12. System according to any of claims 10 or 11, wherein the processing means (MT) are configured to identify (210) correctable hole pixels to the identifying step of the method according to any of claims 6 or 7.

13. System according to any of claims 10 to 12, additionally including:

- emitting means (ME) configured so as to be able to emit an optical radiation,
- receiving means (MR), comprising the pixel array, configured so as to be able to detect photons of an optical radiation,
- histogram generation means (MGH) configured to generate a histogram (HST) comprising bins associating a number of detected photons to a given acquisition time for each pixel,

and wherein the processing means (MT) are configured to process the histogram of the pixels, in order to provide (201) the identification of pixels where a target has been detected, the correctable hole pixels, and the target feature values.

# FIG.1

# FIG.2

FIG.3

# FIG.4

$(\; \widetilde{S}_i \; ; \; z_i \; ; \; \widetilde{A}_i \; ; \; N_i \; ; \; T_i \; )$ px_i        px_k $(\; \widetilde{A}_k \; ; \; N_k \; ; \; T_k \; )$

Europäisches
Patentamt

European
Patent Office

Office européen
des brevets

# EUROPEAN SEARCH REPORT

Application Number

EP 24 30 5612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/061123 A1 (KENJO YUKINAO [DE]) 22 February 2024 (2024-02-22) * paragraphs [0053] - [0056], [0047], [0101]; figure 1 * | 1-13 | INV. G01S7/48 G01S7/4863 G01S7/4865 G01S7/4914 |
| A | EP 4 063 899 A1 (ST MICROELECTRONICS SA [FR]) 28 September 2022 (2022-09-28) * paragraphs [0089] - [0092]; figure 2 * | 2-5,8, 11-13 | G01S7/4915 G01S7/497 |

**TECHNICAL FIELDS SEARCHED (IPC)**

G01S

The present search report has been drawn up for all claims

| Place of search | Date of completion of the search | Examiner |
|---|---|---|
| Munich | 26 September 2024 | Ferrara, Michele |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

**ANNEX TO THE EUROPEAN SEARCH REPORT
ON EUROPEAN PATENT APPLICATION NO.**   EP 24 30 5612

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | Publication date | Patent family member(s) | | Publication date |
|---|---|---|---|---|
| US 2024061123 A1 | 22-02-2024 | EP | 4267987 A1 | 01-11-2023 |
| | | US | 2024061123 A1 | 22-02-2024 |
| | | WO | 2022136137 A1 | 30-06-2022 |
| EP 4063899 A1 | 28-09-2022 | CN | 115201787 A | 18-10-2022 |
| | | EP | 4063899 A1 | 28-09-2022 |
| | | US | 2022308173 A1 | 29-09-2022 |

EPO FORM P0459

For more details about this annex : see Official Journal of the European Patent Office, No. 12/82

**REFERENCES CITED IN THE DESCRIPTION**

**Patent documents cited in the description**

- EP 4063899 A1